(19) Europäisches Patentamt

European Patent Office

Office européen des brevets

(11) EP 0 996 273 B1

(12) EUROPEAN PATENT SPECIFICATION

(45) Date of publication and mention
of the grant of the patent:
**06.04.2005 Bulletin 2005/14**

(51) Int Cl.⁷: **H04M 7/00**, H04Q 3/62

(21) Application number: **99308250.2**

(22) Date of filing: **19.10.1999**

(54) **Method and apparatus for providing a configurable quality of service threshold for voice over internet protocol**

Verfahren und Vorrichtung zum Einstellen der Dienstqualitätsparameter der Sprache über Internet Protokol

Méthode et appareil offrant un seuil de qualité de service configurable pour le protocol de la voix via Internet

(84) Designated Contracting States:
**DE FR GB**

(30) Priority: **20.10.1998 US 104908 P**
**23.12.1998 US 219682**

(43) Date of publication of application:
**26.04.2000 Bulletin 2000/17**

(73) Proprietor: **Nortel Networks Limited**
**St. Laurent, Quebec H4S 2A9 (CA)**

(72) Inventors:
- **Coverdale, Paul**
**Ontario, K2H 9R1, (CA)**
- **Kamani, Sejal**
**Arizona 85038, (US)**
- **Wong, Chi**
**Palo Alto, CA 94306 (US)**
- **Kwong, Ben**
**San Jose, CA 95135, (US)**

(74) Representative: **Coyle, Philip Aidan et al**
**F. R. KELLY & CO.**
**27 Clyde Road**
**Ballsbridge**
**Dublin 4 (IE)**

(56) References cited:
**EP-A- 0 848 560** **US-A- 5 726 984**

- **CATCHPOLE A: "VOICE-DATA CONVERGENCE AND THE CORPORATE VOICE-OVER-IP TRIAL" BRITISH TELECOMMUNICATIONS ENGINEERING,GB,BRITISH TELECOMMUNICATIONS ENGINEERING. LONDON, vol. 17, no. 4, page 218-224 XP000801951 ISSN: 0262-401X**

**Description**

## BACKGROUND OF THE INVENTION

The traditional telephone network is a switched network that provides users with a dedicated end-to-end circuit for the duration of each call. Recently, telephone calls have been transmitted over digital networks using packet switched internet protocol (IP) networks, termed voice over IP (VoIP) transmission. Packet-switched IP networks provide shared, virtual circuit connections between users. Voice information to be transmitted across an IP network is converted into digital data and broken up into multiple, discrete packets. Individual packets may travel over different network paths to reach the final destination where the packets are reassembled in the proper sequence to reconstruct the original voice information. The transmission speed between any two users can change dramatically based on the dynamic number of users sharing the common transmission medium, their bandwidth requirements, the capacity of the transmission medium, and the efficiency of the network routing and design.

VoIP transmission typically costs less than transmission over traditional public switched telephone networks (PSTNs). A disadvantage of VoIP networks is the variability of the quality of the signal received at the destination as determined by changing network conditions. The received signal quality depends on a large number of variable network factors such as packet loss, packet latency, queuing delay, and bandwidth availability. These network factors will vary depending on the volume of network traffic and the location of the destination. The IP network, unlike the traditional public switched network, is not uniformly or predictably suitable for voice quality transmission.

Prior art systems that provide VoIP may monitor the quality of service (QoS) for voice transmissions and select alternate routing for calls when the QoS is determined to be unacceptable. However, QoS is a subjective determination. If the threshold level is too low, some users will have calls routed as VoIP when the QoS is unacceptable to the user. If the threshold level is too high, some users will have calls routed over more expensive lines when VoIP would be acceptable to the user.

The decision to route over IP or alternate routing is often a cost trade-off. The cost of alternate routing generally varies substantially depending on destination. Therefore, a QoS threshold that is suitable for a first destination may be too high for a second destination where the alternate routing is more expensive; the user may be willing to accept a lower QoS because of the higher cost of alternate routing. Similarly, the same QoS threshold could be too low where the alternate routing is less expensive.

The QoS requirement can vary depending on the type of call being transmitted. The QoS required for a teleconference is higher than that required for an automated voice response inquiry. In the case of the automated inquiry, the QoS requirement is different in each direction. The caller will transmit only control tones and a low QoS will be acceptable; the responder will transmit recorded voice and a higher QoS will be appropriate.

As pointed out above, QoS is affected by a large number of network factors. Typically, QoS thresholds are set as thresholds for one or more of the factors that affect quality. However, the factors interact in complex ways. A degradation in one factor can be offset by an enhancement of another factor. Setting thresholds for individual parameters to arrive at an appropriate QoS threshold is difficult. Further, setting thresholds for individual factors disregards the interaction between the factors. The QoS provided when all factors are above the threshold may also be available when one factor is below the threshold if other factors are sufficiently above the threshold.

The International Telecommunications Union (ITU) has issued recommendation G.107, The E-Model, A Computational Model for Use in Transmission Planing (Geneva 1998), that provides a transmission rating model, termed the E-model, for calculating a rating factor, R, based on a large number of terminal and network parameters which are known to impact the subjective perception of end to end voice quality. The recommendation also includes a guide for relating values of R to qualitative measures of voice quality transmission, including Mean Opinion Score (MOS). Higher values of R and MOS correspond to better voice quality and higher QoS. However, computation of R by the full E-model is complex and it is computationally wasteful to use it to compute R values for use in monitoring QoS in real-time.

EP 848,560 discloses a method of connecting a telephone call through one of a plurality of networks where one of the plurality of networks is an internet protocol network, comprising: setting a first factor to set a minimum quality of service level; receiving a second factor responsive to the quality of service provided by the internet protocol network; and connecting the telephone call through the internet protocol network if the second factor is greater than the first factor, otherwise, connecting the telephone call through one of the plurality of networks other than the internet protocol network.

The present invention provides a method characterized by calculating the second factor by subtracting a first value responsive to a first network measure and a second value responsive to a second network measure from a constant value.

The invention provide an improved method and apparatus for configuring the QoS threshold for VoIP connection of calls. The method and apparatus allow the threshold to be set based on the destination of the call being placed. Further, the method and apparatus allow the threshold to be set based on an overall QoS desired rather than by setting thresholds for specific transmission parameters.

## SUMMARY OF THE INVENTION

A method of connecting a telephone call through one of a plurality of networks where one of the plurality of networks is an internet protocol network is provided. A threshold value is received. A rating factor responsive to the quality of service for the internet protocol network is calculated. The telephone call is connected through the internet protocol network if the rating factor is greater than the threshold, otherwise, the telephone call is connected through one of the plurality of networks other than the internet protocol network.

## BRIEF DESCRIPTION OF THE DRAWINGS

Figure 1 shows a user screen for providing QoS thresholds.

Figure 2 shows a telephone system using an embodiment of the invention.

Figure 3 shows the QoS levels as determined by the simplified E-Model for a G.723.1 codec.

Figure 4 shows the QoS levels as determined by the simplified E-Model for a G.729A codec.

Figure 5 shows the QoS levels as determined by the simplified E-Model for a G.711 codec.

## DETAILED DESCRIPTION OF THE INVENTION

The present invention provides a method and apparatus that permits the user to configure the quality of service (QoS) threshold for voice over internet protocol (VoIP) routing of calls. One embodiment of the invention allows the threshold to be set based on the destination of the call being placed. Another embodiment of the invention allows the threshold to be set based on an overall QoS desired rather than by setting thresholds for specific transmission parameters. A telephone call is connected through either an IP network or an alternate network based on a comparison of the user configured QoS threshold to the QoS being provided by the IP network to the call destination.

An additional aspect of the present invention is a method of generating a profile of quality of service levels in an IP network. The method comprises the steps of periodically transmitting data packets to selected IP addresses, calculating total one-way delay and packet loss for each selected IP address based on packets received back from the selected IP addresses, and calculating a transmission rating factor for each selected IP address based on the calculated total one-way delay and packet loss of the selected IP address.

As described herein, a user of a telephone routing system may select the level of acceptable voice quality before initiating a phone call. Based on the selection, the system automatically determines whether to complete the call using an internet protocol (IP) network or an alternate route such as a public switched telephone network (PSTN). The invention includes three major areas: user interface, network monitoring, and route selection. The user interface portion of the invention allows a user to establish the desired QoS to be provided by the system prior to placing a phone call. The network monitoring portion of the invention monitors the quality of service being provided by the IP network and maintains QoS information for use in connecting calls. The route selection portion of the invention receives the information about a call to be connected, the user supplied QoS parameters, and the network monitor QoS data, and determines if the call can be routed over the IP network.

The determination of whether voice quality is "acceptable" or "unacceptable" in an IP network is a subjective determination depending primarily on packet loss (for a given speech encoding scheme) and packet delay, which includes a fixed delay due to speech encoding and decoding and packetization, and a variable delay due to IP packet transport. In one embodiment of the invention, the user sets a maximum acceptable rate of packet loss and a maximum acceptable rate of packet delay. If either of these values is exceeded by the IP network, the call will not be routed through the IP network.

Setting individual thresholds for packet loss and packet delay leads to a non-optimum control of voice quality. For example, in some cases the voice quality may be dominated by high packet loss, in other cases by packet delay. A greater rate of packet loss may be acceptable when packet delay is low and vice-versa. Another embodiment of the invention allows the user to set QoS requirements using a subjective level of service rather than specific IP network parameters. Preferably, the user selectable QoS levels are based on the ITU mean opinion score (MOS) and include "Excellent," "Good," "Fair," and "Poor." When the IP network is unable to deliver the selected level of quality or better, the call is routed through an alternate network such as the public switched telephone network (PSTN). In this embodiment of the invention, the network monitoring portion provides a calculated measure of MOS that can be compared to the user provided subjective requirement to determine call routing.

The user requirements for QoS may depend on the cost of using an alternate network. For example the incremental cost of routing a call over an alternate network might be lower for a call from California to New York than for a call from California to Japan. Accordingly, the user might have a lower call quality requirement for calls between California and Japan to allow a greater portion of those calls to be routed over the IP network. Likewise, the QoS might be set higher for calls between California and New York if the user is willing to pay the cost of using the alternate network rather than accepting lower call quality. In one embodiment, the present invention allows the user to set QoS requirements based on the destination of the call. For example, calls directed to a prefix where the cost of using the alternate network is low may be set to "excellent" or "good" call quality, while calls directed to a prefix where the cost of using the alternate network is high may be set to "fair" or "poor" signal quality.

Absolute voice quality requirements are different for different users. In addition, the user's expectation of voice quality and the trade-off between cost and quality may also be different for each user. In one embodiment of the invention, the user is able to set QoS requirements separately for each telephone line. In some applications such as integrated voice response (IVR), a higher level of service is needed in one direction than in the other. In IVR, the caller needs a better QoS for the voice responses, reception, than for the tone signaling, transmission. Another embodiment of the invention allows the user to determine QoS separately for transmission and reception. It should be noted that the caller controls the quality of the call in both directions. The Transmit and Receive QoS setting provides the flexibility to accommodate the asymmetric nature of the IP data network.

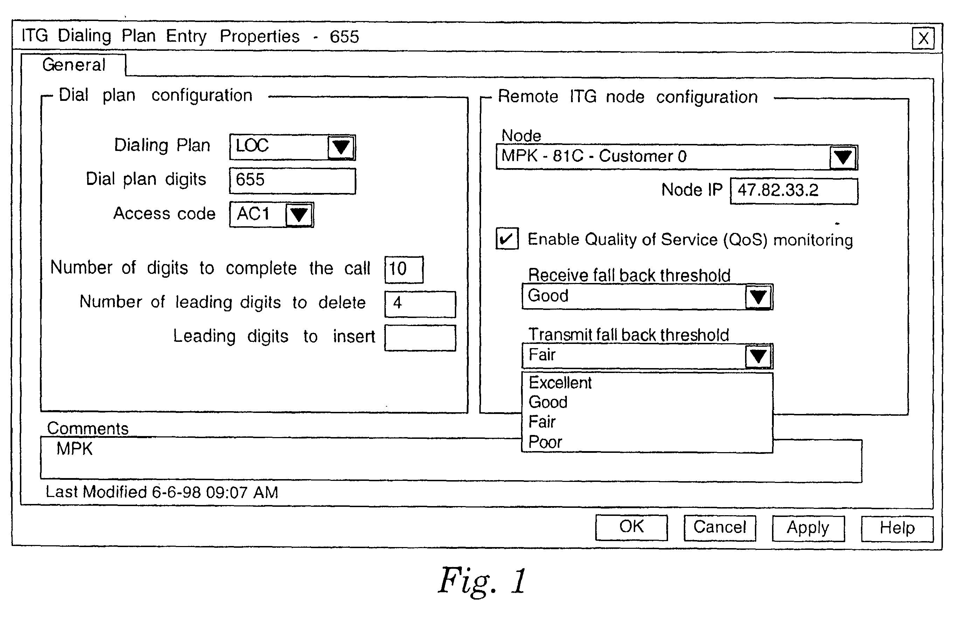

Figure 1 illustrates a graphical user interface (GUI) for one embodiment of the invention that incorporates the above concepts for setting desired levels of service. A screen is shown that allows the dialing plan properties for the 655 prefix to be set. The portion of the screen labeled "Remote ITG node configuration" provides an IP node address that can connect calls directed to the 655 prefix. The present invention is operative when "Enable Quality of Service (QoS) monitoring" is checked. The user is able to set a "Receive fall back threshold" and a "Transmit fall back threshold." As shown for the "Transmit fall back threshold," the user selects the threshold from "Excellent," "Good," "Fair," and "Poor." Although "user," as discussed above, is used in the context of a technician or craftsperson, concepts consistent with the present invention could equally be applied to allow the person dialing the telephone calls to select the level of quality before dialing each call. For example, the caller could enter a dialed code that overrides the predetermined quality settings for the next call placed.

The network monitor portion of the invention maintains IP network statistics that are compared to the user quality requirements to make call routing decisions. Statistics are maintained for all the quality categories provided by the user. In the embodiment where the user sets QoS as maximum packet loss and maximum packet delay for each telephone line, for both transmission and reception, based on call destination, the network monitor will maintain statistics for packet loss and packet delay for transmission and reception to all configured destinations. Note that the per telephone line QoS settings do not affect the network monitoring requirements.

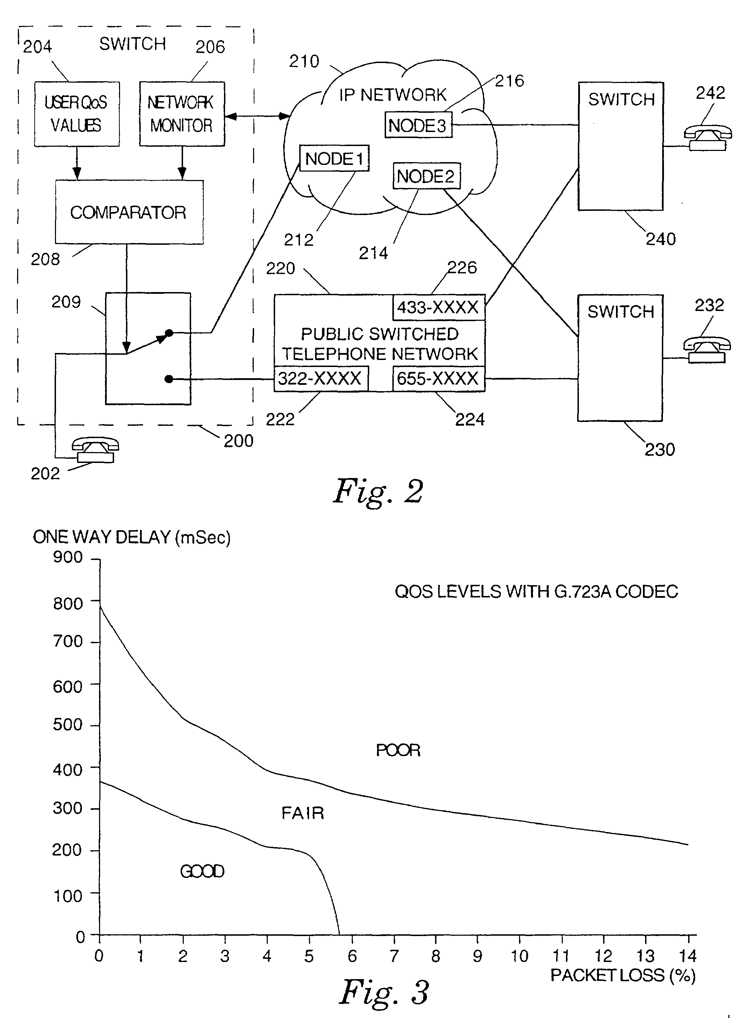

Figure 2 shows a telephone system that includes an embodiment of the invention. The system includes three local switches 200, 230, 240 that provide connections for callers 202, 232, 242, who are at three different geographic locations. Each switch 200, 230, 240 can connect to any other switch through the IP network 210 or through the public switched telephone network (PSTN) 220. A call placed by a first caller 202, through a first switch 200 to a second caller 232 through a second switch 230 can be connected through the IP network 210 or through the PSTN 220.

A network monitor 206 in the first switch 200 periodically polls the destination nodes 214, 216 of the IP network 210 to determine the total one-way delay, Ta, and percent packet loss for transmissions between the local switch 200 and each defined destination switch 230, 240 reachable through the IP network 210. A table of user defined QoS parameters 204 is maintained by the switch 200. When the user 202 places a call, the switch 200 determines which of the IP nodes 214, 216 can complete a call to the dialed number. For example, a call to "655-XXXX" can be completed through node 2 214 on the IP network 210. The switch then retrieves the user QoS values 204 associated with the 655 prefix from the table 204 and the network QoS statistics associated with node 2 214 from the network monitor 208. A comparator 208 determines if the network QoS statistics 206 show a QoS for the IP network 210 that is above the user determined threshold 204. If the QoS is above the threshold 204, then the call is completed though the IP network 210 by a network selector 209; otherwise, the call is routed through an alternate network such as the PSTN network 220.

In the embodiment where the user sets quality requirements 204 with subjective quality levels, the network monitor 206 must calculate a composite factor that reflects the subjective level of service being provided by the IP network 210 to be compared to a value 204 based on the subjective user requirements. ITU recommendation G.107 provides a method for calculating an R value, termed the E-Model, that provides a numeric value for predicting user satisfaction with voice quality for call connected through an IP network. The recommendation relates subjective levels of service to qualitative measures of voice quality as shown in Table I. The recommendation also provides the following formula to relate R values to a numeric MOS value, for $0 < R < 100$:

$$MOS = 1 + 0.035R + R (R - 60) (100-R) 7x \ 10^{-6}$$

Table I

| R value lower limit | MOS lower limit | GOB % lower limit | POW % upper limit | User satisfaction |
|---|---|---|---|---|
| 90 | 4.34 | 97 | -0 | Very satisfied |
| 80 | 4.03 | 89 | -0 | Satisfied |
| 70 | 3.60 | 73 | 6 | Some users dissatisfied |
| 60 | 3.10 | 50 | 17 | Many users dissatisfied |
| 50 | 2.58 | 27 | 38 | Nearly all users dissatisfied |

R value lower limit is the lowest value of R that will provide the indicated level of user satisfaction. MOS lower limit is the corresponding value on the MOS scale. GOB % lower limit is the percentage of listeners who would be expected to rate call quality as "good" or better at the given R value. POW % upper limit is the percentage of listeners who would be expected to rate call quality as "poor" or worse at the given R value. "Good" and "poor" are evaluated on the five step qualitative MOS scale.

The present invention provides a simplified version of the ITU E-Model for calculating R on a real-time basis by the network monitor 206. The E-Model determines the combined effect of packet loss, packet latency and the speech coding algorithm (compression/decompression algorithm) on voice quality. The simplified E-Model calculates R as:

$$R = 94.15 - (Idd + Ie)$$

where, for Ta<100ms:
Idd=0
and for Ta>100 ms:

$$Idd = 25 \left\{ \left(1 + X^6\right)^{1/6} - 3 \left[1 + (X/3)^6\right]^{1/6} + 2 \right\}$$

in which:

$$X = \frac{\log(Ta/100)}{\log 2}$$

Ta is the total one-way delay resulting from speech coding packetization, buffering IP routing queuing and propagation, etc. As discussed above, Ta for the destination nodes 232, 242 is periodically measured by the network monitor 206. Methods of determining Ta in an IP network are known. For example, Ta between two modes may be physically measured by sending a test packet to the destination node. The destination node time stamps the received packet and sends it back. The receiving node can then directly measure Ta based on the time stamp and the reception time of the returned packet.

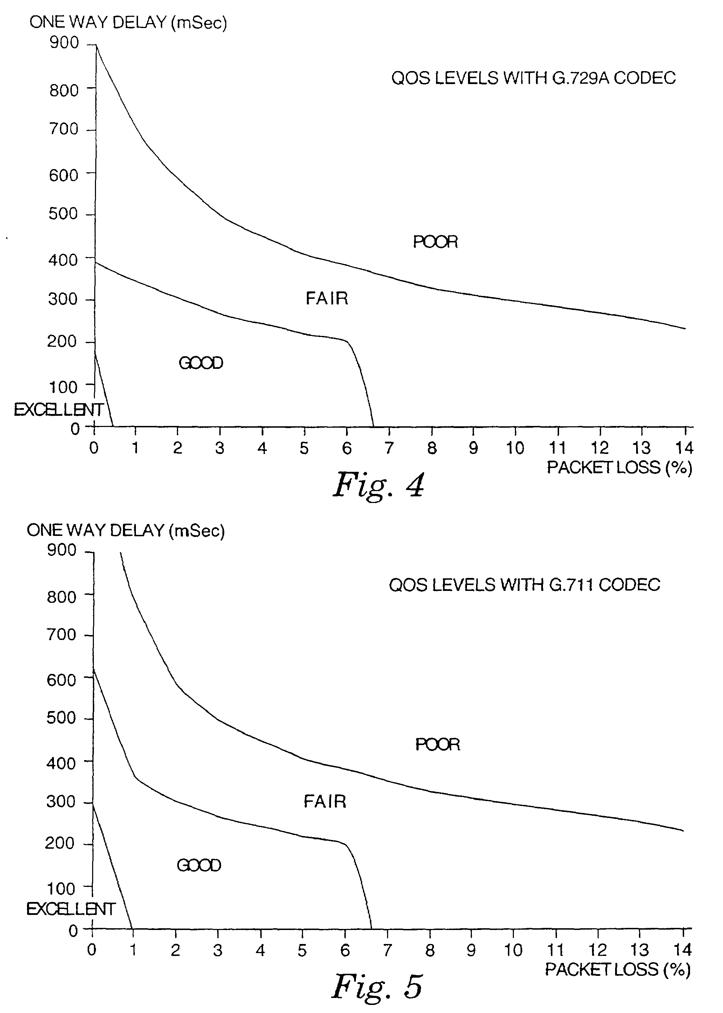

Ie is the impairment factor due to low bit-encoding and packet loss on the IP network. Ie is preferably calculated using conventional subjective listening carried out on the speech coders being used, generally following the standard procedures in ITU-T recommendation P.830. Values of Ie were obtained from the results of these tests following the procedure given in ITU-T recommendation G.113 Annex E. Table II, below, lists exemplary values of Ie for three different codec types, G.723.1, G.729A and G.711. Figures 3 - 5 show typical relationships between packet loss, packet latency, and QoS for three exemplary codecs as determined by the simpified E-model of the present invention. The illustrative boundary lines shown are based on the exemplary threshold values given in Table III.

Table II

| Codec | G.723.1 | G.729A | G.711 |
|---|---|---|---|
| % Packet Loss | Value of Ie from experimental data | | |
| 0 | 15 | 13 | 0 |
| 1.0 | 19 | 17 | 15 |
| 2.0 | 24 | 21 | 21 |
| 3.0 | 27 | 25 | 25 |
| 4.0 | 32 | 28 | 28 |
| 5.0 | 34 | 31 | 31 |
| 6.0 | 37 | 33 | 33 |
| 8.0 | 41 | 38 | 38 |
| 13.0 | 49 | 46 | 46 |
| 14.0 | 51 | 48 | 48 |
| 15.0 | 53 | 49 | 49 |
| 16.0 | 55 | 51 | 51 |

In one embodiment, the network monitor 206 periodically calculates an R value for each communication path formed by the destination nodes 212, 214 using the simplified E-Model described above. The subjective user values 204 are stored as the related R values as shown in Table III. The comparator 208 compares the R value being provided by the network 206 to the desired R value 204 derived from the user's subjective quality threshold to determine if the call can be connected through the IP network 210. In figures 3-5, a call will be connected through the IP network 210 when the packet loss and packet latency being provided by the IP network intersect at a point that is below and to the left of the boundary for the subjective MOS as set by the user for the codec being used. Note that for a G.723.1 codec (Fig. 3) a quality requirement of "excellent" will result in no calls being routed through the IP network when the threshold values of Table III are used. When the quality requirement is "poor" all calls are routed through the IP network based on the threshold values of Table III.

Table III

| Subjective MOS | Connect via IP network if MOS is above | Connect via IP network if R value is above |
|---|---|---|
| Excellent | 4 | 79.3 |
| Good | 3 | 58.0 |
| Fair | 2 | 38.6 |
| Poor | 1 (always use IP network) | 0 (always use IP network) |

In another embodiment, the network monitor 206 further calculates an MOS value using the ITU formula given above from the R value. The comparator compares the MOS being provided by the network 206 to the desired MOS 204 derived from the user's subjective quality threshold, as shown in Table III, to determine if the call can be connected through the IP network 210.

The system discussed above is preferably implemented at the transmitting and receiving end, by a computer or a network of computers coupled to both an IP network and a public switched network. Methods consistent with the present invention, as discussed above, may be implemented as computer software within the computers.

In summary; A method of connecting a telephone call through one of a plurality of networks where one of the plurality of networks is an internet protocol network is provided. A threshold value is received. A rating factor responsive to the quality of service for the internet protocol network is calculated. The telephone call is connected through the internet protocol network if the rating factor is greater than the threshold, otherwise, the telephone call is connected through one of the plurality of networks other than the internet protocol network.

**Claims**

1. A method of connecting a telephone call through one of a plurality of networks where one of the plurality of networks is an internet protocol network, comprising:

   setting a first factor to set a minimum quality of service level;
   receiving a second factor responsive to the quality of service provided by the internet protocol network; and
   connecting the telephone call through the internet protocol network if the second factor is greater than the first factor, otherwise, connecting the telephone call through one of the plurality of networks other than the internet protocol network;

   **characterized by**:

   calculating the second factor by subtracting a first value responsive to a first network measure and a second value responsive to a second network measure from a constant value.

2. The method of claim 1, further comprising:

   determining a destination of the telephone call;
   setting the first factor responsive to the destination of the telephone call.

3. The method of claim 1 or 2, where:

   setting the first factor further comprises setting a first transmission factor and a first reception factor;
   receiving the second factor further comprises receiving a second transmission factor and receiving a second reception factor; and
   connecting the telephone call further comprises connecting the telephone call through the internet protocol network if the second transmission factor is greater than the first transmission factor and the second reception factor is greater than the first reception factor, otherwise, connecting the telephone call through one of the plurality of networks other than the internet protocol network.

**Patentansprüche**

1. Verfahren zum Verbinden eines Telefonanrufs über eines einer Vielzahl von Netzwerken, wobei eines der Vielzahl von Netzwerken ein Intemetprotokoll-Netzwerk ist, mit:

   Setzen eines ersten Faktors zum Setzen eines minimalen Dienstgütegrades;
   Empfangen eines zweiten Faktors in Abhängigkeit von der Dienstgüte, die von dem Internetprotokoll-Netzwerk bereitgestellt wird; und
   Verbinden des Telefonanrufs über das Internetprotokoll-Netzwerk, wenn der zweite Faktor größer als der erste Faktor ist, anderenfalls Verbinden des Telefonanrufs über eines der Vielzahl von anderen Netzwerken als dem Internetprotokoll-Netzwerk;

   **gekennzeichnet durch**:

   Berechnen des zweiten Faktors **durch** Subtrahieren eines ersten Wertes in Abhängigkeit von einer ersten Netzwerk-Messung und eines zweiten Wertes in Abhängigkeit von einer zweiten Netzwerk-Messung von einem konstanten Wert.

**2.** Verfahren nach Anspruch 1, das weiterhin Folgendes umfasst:

Feststellen eines Ziels des Telefonanrufs;
Setzen des ersten Faktors in Abhängigkeit von dem Ziel des Telefonanrufs.

**3.** Verfahren nach Anspruch 1 oder 2, bei dem:

das Setzen des ersten Faktors weiterhin das Setzen eines ersten Sendefaktors und eines ersten Empfangsfaktors umfasst;
der Empfang des zweiten Faktors weiterhin den Empfang eines zweiten Sendefaktors und den Empfang eines zweiten Empfangsfaktors umfasst; und
das Verbinden des Telefonanrufs weiterhin das Verbinden des Telefonanrufs über das Internetprotokoll-Netzwerk, wenn der zweite Sendefaktor größer als der erste Sendefaktor und der zweite Empfangsfaktor größer als der erste Empfangsfaktor ist, und anderenfalls das Verbinden des Telefonanrufs durch eines der Vielzahl von anderen Netzwerken als dem Internetprotokoll-Netzwerk umfasst.

**Revendications**

**1.** Un procédé de connexion d'un appel téléphonique à travers l'un d'une multiplicité de réseaux, dans lequel l'un de la multiplicité de réseaux est un réseau utilisant le protocole Internet, comprenant :

la fixation d'un premier facteur pour fixer un niveau minimum de qualité de service ;
la réception d'un second facteur qui est fonction de la qualité de service fournie par le réseau utilisant le protocole Internet ; et
la connexion de l'appel téléphonique à travers le réseau utilisant le protocole Internet si le second facteur est plus grand que le premier facteur, et sinon la connexion de l'appel téléphonique à travers l'un de la multiplicité de réseaux autres que le réseau utilisant le protocole Internet ;

   **caractérisé par** :

le calcul du second facteur en soustrayant d'une valeur constante une première valeur qui est fonction d'une première mesure de réseau, et une seconde valeur qui est fonction d'une seconde mesure de réseau.

**2.** Le procédé selon la revendication 1 , comprenant en outre :

la détermination d'une destination de l'appel téléphonique ;
la fixation du premier facteur en fonction de la destination de l'appel téléphonique.

**3.** Le procédé selon la revendication 1 ou 2, dans lequel :

la fixation du premier facteur comprend en outre la fixation d'un premier facteur d'émission et d'un premier facteur de réception ;
la réception du second facteur comprend en outre la réception d'un second facteur d'émission et la réception d'un second facteur de réception ; et
la connexion de l'appel téléphonique comprend en outre la connexion de l'appel téléphonique à travers le réseau utilisant le protocole Internet si le second facteur d'émission est plus grand que le premier facteur d'émission et le second facteur de réception est plus grand que le premier facteur de réception, et sinon la connexion de l'appel téléphonique à travers l'un de la multiplicité de réseaux autres que le réseau utilisant le protocole Internet.

EP 0 996 273 B1

ITG Dialing Plan Entry Properties - 655     [X]

## General

### Dial plan configuration

Dialing Plan    [ LOC    ▼ ]

Dial plan digits    [ 655 ]

Access code    [ AC1 ▼ ]

Number of digits to complete the call    [ 10 ]

Number of leading digits to delete    [ 4 ]

Leading digits to insert    [   ]

### Remote ITG node configuration

Node
[ MPK - 81C - Customer 0     ▼ ]

Node IP [ 47.82.33.2 ]

[✔] Enable Quality of Service (QoS) monitoring

Receive fall back threshold
[ Good     ▼ ]

Transmit fall back threshold
[ Fair     ▼ ]

Excellent
Good
Fair
Poor

Comments
MPK

Last Modified 6-6-98 09:07 AM

[ OK ]   [ Cancel ]   [ Apply ]   [ Help ]

*Fig. 1*

Fig. 2

Fig. 3

EP 0 996 273 B1

Fig. 4

Fig. 5

11